# FASCICULE DE BREVET EUROPEEN

(11) **EP 2 303 687 B1**
(45) Date de publication et mention de la délivrance du brevet: **27.03.2013**
(21) Numéro de dépôt: 09784470.8
(22) Date de dépôt: 06.07.2009
(51) Int. Cl.: B64C 25/16, B64C 25/22

(54) **SYSTEME D'OUVERTURE ET DE FERMETURE DE TRAPPE POUR CASE DE TRAIN D'ATTERRISSAGE D'UN AERONEF**
SYSTEM ZUM ÖFFNEN UND SCHLIESSEN DER FAHRWERKSKLAPPE EINES FLUGZEUGES
SYSTEM FOR OPENING AND CLOSING THE LANDING GEAR DOOR OF AN AIRCRAFT

(30) Priorité: 08.07.2008 FR 0854627
(43) Date de publication de la demande: 06.04.2011
(73) Titulaire: Airbus Operations, 31060 Toulouse (FR)
(72) Inventeur: GLEYSE, Gilbert, 86700 Ceaux-en-Couhé (FR)
(74) Mandataire: Ilgart, Jean-Christophe
(86) Numéro de dépôt international: PCT/FR2009/051326
(87) Numéro de publication internationale: WO 2010/004200

(56) Documents cités:
- DE-C- 733 010
- GB-A- 653 132
- US-A- 2 552 843
- US-A- 3 107 886

## Description

### DOMAINE TECHNIQUE

La présente invention concerne un système d'ouverture et de fermeture d'une trappe de la case de train d'atterrissage d'un aéronef. Un exemple de l'art antérieur est fourni par le document US 3,107,886.

### ETAT DE LA TECHNIQUE ANTERIEURE

La case de train d'atterrissage sert à loger un train d'atterrissage sur tout type d'aéronef, notamment lorsque le train d'atterrissage est placé sous le fuselage de l'aéronef.

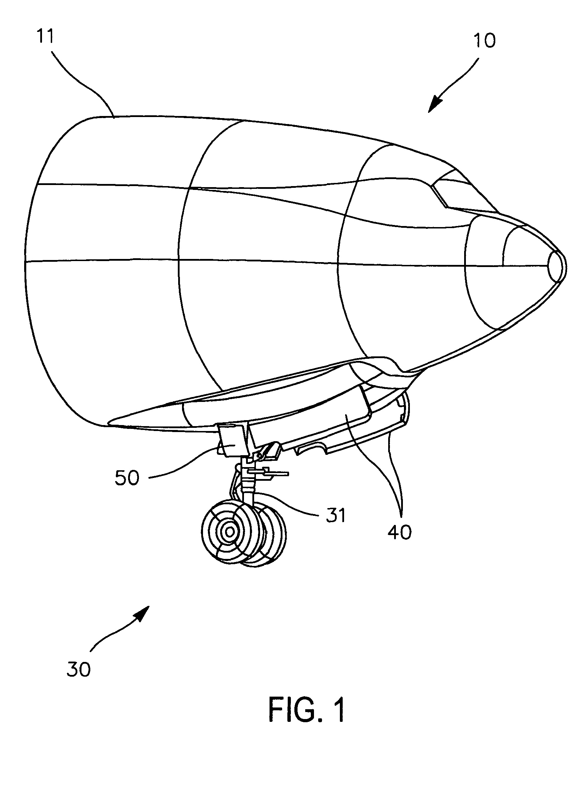

Habituellement, cette case de train est fermée par plusieurs trappes. Par exemple, et en référence à la figure 1, la case 20 du train d'atterrissage avant 30 est notamment fermée par :
- les trappes avant 40, qui s'ouvrent lors de la descente du train 30, pour laisser passer notamment la jambe 31 de celui-ci, et se referment après la sortie du train 30 de manière à préserver l'aérodynamisme du fuselage 11 de l'aéronef 10, et
- les trappes arrière 50, qui s'ouvrent lors de la descente du train 30 et restent ouvertes tant que le train 30 est sorti.

Une trappe de train d'atterrissage est formée habituellement d'un panneau rigide monobloc. Ce panneau est généralement articulé sur la structure d'aéronef autour d'un axe de pivotement décalé vers l'intérieur de la case de train par rapport audit panneau. Plus précisément, le panneau est monté solidaire du train, de sorte que la sortie et la rentrée du train entraînent, respectivement, l'ouverture et la fermeture du panneau.

Le pivotement de la trappe est habituellement obtenu au moyen d'une liaison mécanique directe entre la trappe et le train.

La liaison directe consiste en une bielle unique montée, d'une part, sur le train d'atterrissage, par exemple sur la jambe, la potence ou la contrefiche, et d'autre part sur la trappe. Ainsi, lors de la sortie du train, celui-ci pivote autour d'un axe provoquant le déplacement de la bielle qui fait pivoter la trappe dans sa position d'ouverture. Parallèlement, la rentrée du train dans la case entraîne la fermeture de la trappe.

L'utilisation d'une liaison unique a cependant l'inconvénient de présenter une liberté de positionnement de la bielle limitée, impliquant d'importantes contraintes de conception.

En effet, la bielle est nécessairement montée d'une part sur le train et d'autre part sur la trappe.

Parmi ces contraintes, on note parfois l'obligation de disposer la bielle de manière inclinée par rapport à la trappe, du fait notamment de l'espace réduit dans la case de train et la cinématique du train et de la trappe.

Une conséquence est la faible intensité du moment de rappel exercée par la bielle sur la trappe, lorsque celle-ci est en position fermée. La trappe subie en effet des efforts aérodynamiques très importants que la bielle ne peut équilibrer en totalité.

Aussi, pour reprendre les efforts subis par la trappe, les ferrures d'attache de la trappe à la structure de la case, par exemple des cols de cygne, sont renforcés et présentent alors une grande dimension. Il se pose donc des problèmes de masse et d'encombrement.

Par ailleurs, avant la sortie du train et lorsque les trappes avant sont ouvertes, l'air s'engouffre dans la case de train et exerce également un effort très important sur les trappes arrière.

Les trappes arrière vibrent fortement, ce qui induit, outre des problèmes de bruit, une fatigue prématurée des trappes et des bielles correspondantes.

### EXPOSÉ DE L'INVENTION

L'invention a principalement pour objet un système d'ouverture et de fermeture d'une trappe de la case de train d'atterrissage, dont la conception originale lui confère une grande liberté de positionnement.

Le système d'ouverture et de fermeture d'une trappe comporte des moyens de liaison entre le train d'atterrissage et la trappe conçus pour assurer l'ouverture de la trappe lors de la sortie du train et la fermeture de la trappe lors de la rentrée du train.

Selon l'invention, les moyens de liaison comportent un premier système formant vérin monté sur le train et un second système formant vérin monté sur la trappe, les deux systèmes formant vérin étant reliés l'un à l'autre par au moins un moyen de communication fluidique de sorte que l'actionnement du premier système formant vérin entraîne l'actionnement du second système formant vérin, et de sorte que le premier système formant vérin, le second système formant vérin et le moyen de communication fluidique forment ensemble au moins un circuit fluidique fermé.

Ainsi, le système selon l'invention présente une grande liberté de positionnement et permet alors de s'adapter aux contraintes cinématiques et aux contraintes de gestion d'espace dans la case de train.

En effet, la trappe n'est pas reliée directement au train d'atterrissage, mais indirectement, par l'intermédiaire de deux systèmes formant vérin reliés entre eux par des moyens de communication fluidique.

Cette liaison indirecte offre un degré de liberté supplémentaire par rapport à la liaison directe de l'art antérieur.

Le système selon l'invention présente, en effet, deux axes de translation correspondant à l'axe propre de translation de chacun desdits systèmes formant vérin. Ces axes de translation ne sont pas nécessairement orientés selon une direction imposée. En effet, seul un point de fixation est défini pour chaque système formant vérin, le point de fixation sur le train pour le premier système formant vérin et le point de fixation sur la trappe pour le second. Chaque système formant vérin présente donc la liberté d'être orienté selon une direction adaptée.

En conséquence, il est possible notamment de monter le second système formant vérin selon une orientation qui lui permet d'équilibrer les efforts aérodynamiques subis par celle-ci.

Ainsi, le second système formant vérin peut être également monté sur la case de train.

Le second système formant vérin peut être disposé de manière sensiblement perpendiculaire, localement, à la trappe lorsque celle-ci est fermée.

Les efforts aérodynamiques exercés sur la trappe sont alors équilibrés par le second système formant vérin. Il n'est plus nécessaire de renforcer ni de surdimensionner les cols de cygne, ce qui permet de répondre aux exigences de masse et d'encombrement propres à l'aéronautique.

Par ailleurs, le système selon l'invention a l'avantage de ne pas complexifier l'actionnement de la trappe par des moyens de commande dédiés. En effet, l'actionnement du second système formant vérin est commandé par l'actionnement du premier système formant vérin, et non par des moyens supplémentaires.

En outre, le ou les circuits fluidiques fermés ainsi formés ne communiquent pas fluidiquement avec le dispositif de manoeuvre assurant la sortie et la rentrée du train d'atterrissage.

Avantageusement, les systèmes formant vérin sont des vérins à double effet.

Selon un mode de réalisation de l'invention, chaque cylindre desdits systèmes formant vérin comporte une chambre avant et une chambre arrière, la chambre avant reçoit une tige dite d'actionnement. Un premier tuyau assure la communication fluidique entre lesdites chambres avant et un second tuyau assure la communication entre lesdites chambres arrière.

Dans un autre mode de réalisation de l'invention, le premier tuyau assure la communication fluidique entre la chambre avant du premier système formant vérin et la chambre arrière du second système formant vérin et le second tuyau assure la communication entre la chambre arrière du premier système formant vérin et la chambre avant du second système formant vérin.

De préférence, les tuyaux sont flexibles.

Les vérins peuvent comporter une double tige.

Chaque vérin comprend, de préférence, une partie de fixation qui s'étend suivant l'axe de symétrie du cylindre à partir de la chambre arrière.

Chaque système formant vérin peut comprendre un compensateur volumétrique.

L'invention a également pour objet un aéronef comportant un système d'ouverture et de fermeture d'une trappe présentant l'une quelconque des caractéristiques qui viennent d'être définies.

D'autres avantages et caractéristiques de l'invention apparaîtront dans la description détaillée non limitative ci-dessous.

### BRÈVE DESCRIPTION DES DESSINS

On décrira à présent, à titre d'exemples non limitatifs, des modes de réalisation de l'invention, en se référant aux dessins annexés, dans lesquels :
La figure 1, déjà décrite, est une vue générale en perspective et de côté de l'avant d'un aéronef dont le train d'atterrissage avant est sorti ;
La figure 2 est une vue en perspective du système d'ouverture et de fermeture de trappe selon un mode de réalisation de l'invention, pour lequel le train est rentré ;
La figure 3 est une vue en perspective du système d'ouverture et de fermeture de trappe selon le mode précédent de réalisation de l'invention, pour lequel le train est sorti ;
La figure 4 est une représentation schématique en coupe de deux vérins hydrauliques du système d'ouverture et de fermeture de trappe de case de train selon un mode de réalisation de l'invention ;
Les figures 5A et 5B sont une représentation schématique en coupe du système selon le mode de réalisation précédent, monté sur le train et sur la trappe, lorsque le train est rentré (figure 5A) et sorti (figure 5B).

### EXPOSÉ DÉTAILLÉ D'UN MODE DE RÉALISATION PRÉFÉRÉ

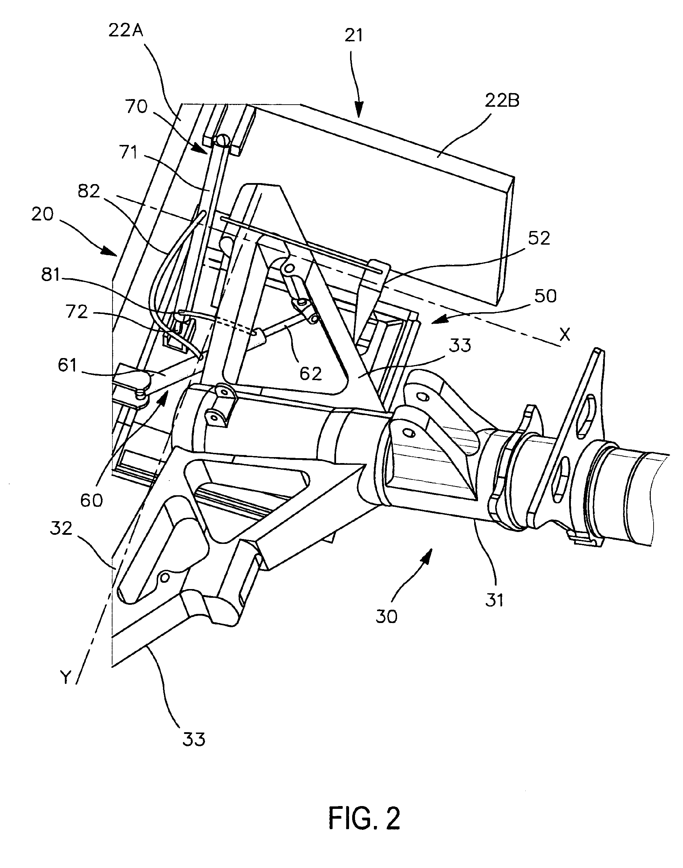

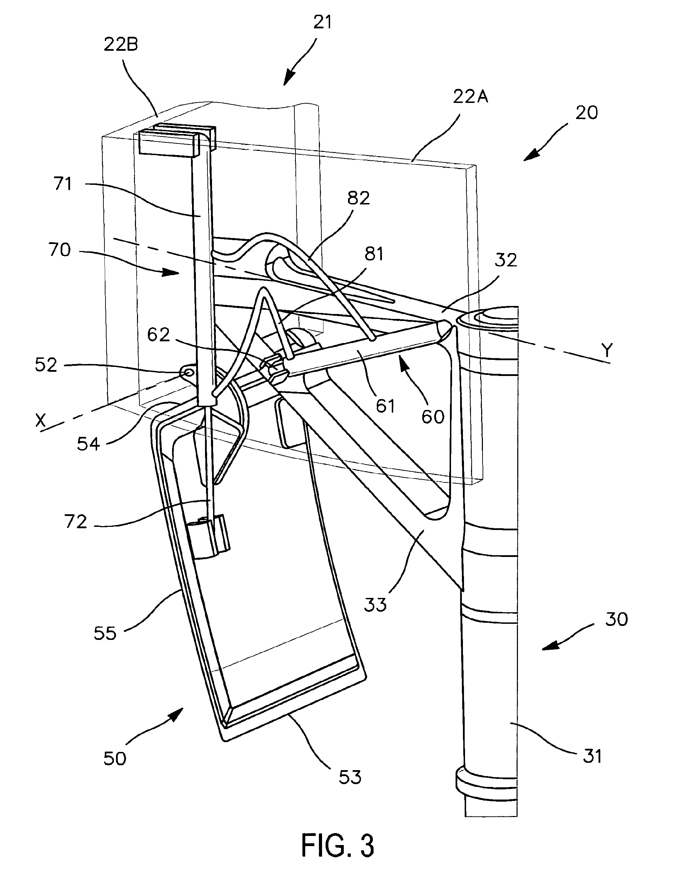

Les figures 2 et 3 montrent des vues en perspective du système d'ouverture et de fermeture d'une trappe selon un mode de réalisation de l'invention, lorsque le train est, respectivement, rentré et sorti. Le train d'atterrissage n'est pas représenté intégralement pour simplifier les figures.

Dans ce mode de réalisation, la trappe 50 est une trappe arrière de la case 20 du train d'atterrissage avant 30. La trappe 50 reste ouverte tant que le train est sorti. Par ailleurs, son mouvement d'ouverture et de fermeture est synchronisé, respectivement, au mouvement de sortie et de rentrée du train.

La case 20 de train comporte une structure 21 rigide formée d'au moins une paroi centrale 22A et de parois latérales 22B, ainsi que d'une paroi de plafond (non représentée). Les parois latérales 22B portent chacune une trappe arrière 50.

Le train 30 comporte notamment une jambe 31 pourvue d'une potence 32 dont les extrémités sont reliées à la jambe 31 par des bras de renfort 33. La potence 32 assure la fixation du train 30 à la structure 21 de la case 20 et constitue un axe de rotation Y de la jambe 31.

Un dispositif de manoeuvre du train 30 (non représenté) est prévu pour assurer la sortie et la rentrée du train 30. Le dispositif de manoeuvre peut comprendre un vérin hydraulique de manoeuvre, relié à la jambe 31, qui peut être actionné par une pompe hydraulique.

Au moins une trappe arrière 50 est prévue pour fermer la case 20 de train 30 lorsque celui-ci est rentré. Une seule trappe 50 est représentée sur les figures 2 et 3.

La trappe 50 est montée pivotante sur une paroi latérale 22B par l'intermédiaire de cols de cygne 52. Le pivotement de la trappe 50 s'effectue autour d'un axe de rotation X.

L'axe de rotation X est sensiblement orthogonal à l'axe de rotation Y. L'axe de rotation X de la trappe est sensiblement parallèle à l'axe longitudinal de l'aéronef.

Le système d'ouverture et de fermeture de la trappe 50 selon le mode de réalisation de l'invention comporte un premier système formant vérin 60, appelé vérin de train, et un second système formant vérin 70, appelé vérin de trappe.

Chaque vérin 60 et 70 comprend un corps de vérin 61, 71 et une tige d'actionnement 62, 72. La tige d'actionnement se déplace en translation par rapport au corps de vérin 61, 71 suivant un axe de symétrie du corps de vérin. La structure des vérins 60 et 70 est décrite en détail ci-après.

Le vérin de train 60 est monté sur un des éléments du train d'atterrissage 30, par exemple, la jambe 31, les bras de renfort 33, ou la contrefiche (non représentée). Dans le mode de réalisation représenté sur les figures 2 et 3, le vérin de train 60 est monté sur un bras de renfort 33 par l'extrémité de la tige d'actionnement 62.

Le corps 61 du vérin de train 60 est monté, de préférence, sur la structure 21 de la case 20 de train, par exemple sur la paroi de plafond, ou sur la paroi centrale 22A comme représenté sur les figures 2 et 3.

Les fixations de la tige 62 et du corps de vérin 61 peuvent être pivotantes ou rotulantes.

Le vérin de trappe 70 est monté sur la trappe 50 de la case de train 20. Comme le montre la figure 3, il peut être monté sur différents emplacements de la trappe 50, par exemple sensiblement à l'emplacement du centre de gravité de la trappe, ou à proximité d'un bord opposé 53 au bord de fixation 54 des cols de cygne 52. Ces exemples d'emplacement de montage du vérin de trappe 70 permettent de limiter les effets des vibrations sur la trappe 50. Dans le mode de réalisation représenté dans les figures 2 et 3, le vérin de trappe 70 est monté par l'extrémité de la tige d'actionnement 72 sur la trappe sensiblement à proximité d'un bord latéral 55.

De préférence, la tige d'actionnement 72 est orientée de manière sensiblement perpendiculaire, localement, par rapport à la trappe 50, lorsque celle-ci est fermée. Elle peut être orientée de manière à former, par rapport à la trappe 50 fermée, un angle solide compris entre sensiblement 0 et par exemple 2 stéradians.

Le corps 71 du vérin de trappe 70 est monté, de préférence, sur la structure 21 de la case 20 de train, par exemple sur la paroi de plafond, ou sur une paroi latérale 22B comme représenté dans les figures 2 et 3.

Les fixations de la tige 72 et du corps de vérin 71 peuvent être pivotantes ou rotulantes.

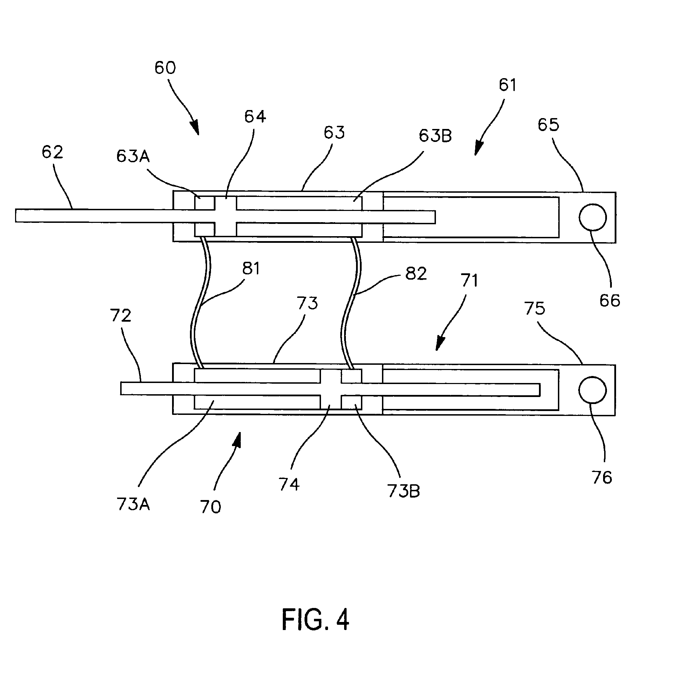

En référence à la figure 4, le corps 61, 71 des vérins 60 et 70 comporte un cylindre 63, 73 à l'intérieur duquel se déplace un piston 64, 74 relié à la tige d'actionnement 62, 72. Le piston 64, 74 définit ainsi deux chambres étanches l'une à l'autre, une chambre dite avant 63A, 73A et une chambre dite arrière 63B, 73B. La chambre avant 63A, 73A se distingue de la chambre arrière 63B, 73B en ce qu'elle loge à coulissement la tige d'actionnement 62, 72.

Dans le mode de réalisation de l'invention, le corps de vérin 61, 71 comprend également une partie de fixation 65, 75 qui s'étend suivant l'axe de symétrie du cylindre 63, 73 à partir de la chambre arrière 63B, 73B. Les vérins 60 et 70 peuvent être montés, respectivement, sur le train et sur la trappe, au niveau de leur partie de fixation 65, 75. De préférence, le point de fixation 66, 76 est situé sur l'axe de symétrie du cylindre 63, 73.

Les vérins 60 et 70 sont avantageusement des vérins à double effet. Ainsi, ils peuvent être actionnés dans un sens de sortie et de rentrée des tiges d'actionnement 62, 72 respectives.

Les vérins 60 et 70 sont reliés l'un à l'autre de sorte que l'actionnement du vérin de train 60 entraîne l'actionnement du vérin de trappe 70. L'actionnement du vérin de trappe 70 est, de préférence, automatique, c'est-à-dire directement commandé par l'actionnement du vérin de train 60. Aussi, il ne nécessite pas de moyens de commande supplémentaires par rapport à ceux assurant l'actionnement du vérin 60.

Pour relier les vérins 60 et 70 entre eux, des tuyaux 81, 82 sont prévus pour assurer la communication fluidique entre les chambres avant 63A, 73A et arrière 63B, 73B des vérins.

Les tuyaux sont, de préférence, flexibles pour s'adapter aux contraintes de gestion d'espace de la case de train 20.

Dans l'exemple représenté schématiquement sur la figure 4, un premier tuyau 81 relie la chambre avant 63A du vérin de train 60 à la chambre avant 73A du vérin de trappe 70. Un second tuyau 82 relie la chambre arrière 63B du vérin de train 60 à la chambre arrière 73B du vérin de trappe 70.

Les pistons 64, 74 sont disposés dans les cylindres 63, 73 de manière à ce que la somme des volumes des chambres avant 63A et 73A et du tuyau 81 égale celle des volumes des chambres arrière 63B et 73B et du tuyau 82. Le volume des tuyaux 81 et 82 peut éventuellement être négligé devant les volumes des chambres.

Par ailleurs, il est avantageux d'utiliser des vérins 60 et 70 à double tige pour assurer l'égalité des volumes maximaux des chambres avant 63A, 73A et arrière 63B, 73B. Le volume maximal d'une chambre se définit lorsque le piston 64, 74 se trouve dans l'une ou l'autre position de butée.

De préférence, les vérins 60 et 70 sont des vérins hydrauliques qui contiennent par exemple de l'huile, ou tout autre liquide approprié, de préférence incompressible. Ils peuvent néanmoins être des vérins pneumatiques. Dans le cas où le fluide utilisé est compressible, chaque vérin 60, 70 comporte avantageusement un compensateur volumétrique, de manière à corriger les variations de volume du fluide contenu dans les chambres dues à des effets thermiques.

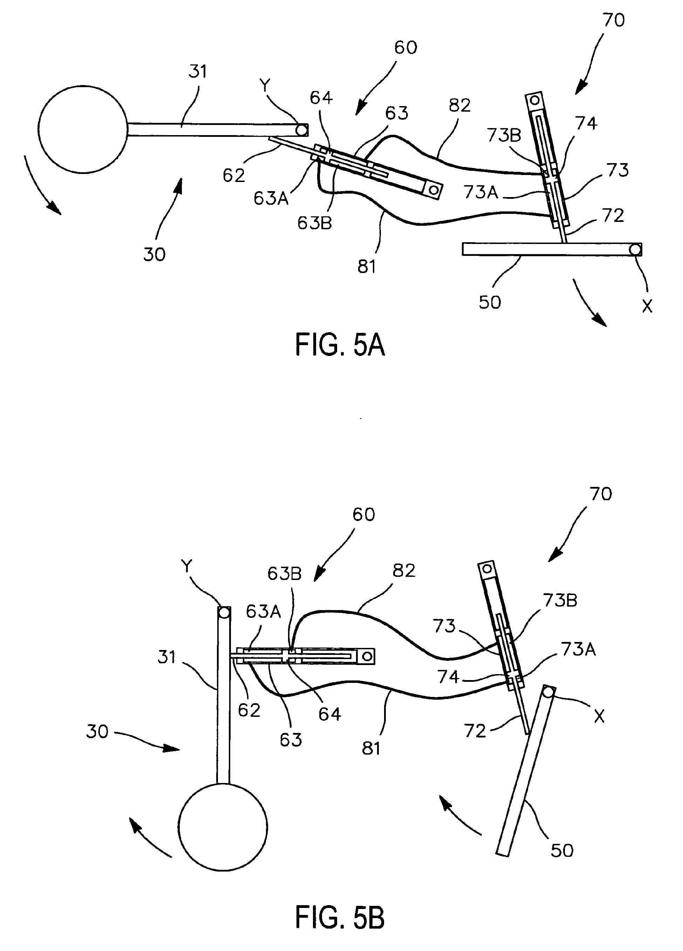

Le principe de fonctionnement du système d'ouverture et de fermeture de trappe est le suivant, en référence aux figures 5A et 5B qui représentent de manière très schématique un système d'ouverture et de fermeture de trappe monté, d'une part, sur le train 30, et d'autre part, sur la trappe 50.

Dans la figure 5A, le train 30 se trouve en position rentrée et la trappe 50 en position fermée.

Le vérin de train 60 est monté sur la jambe de train 31, dans une configuration de tige d'actionnement 62 sortie. Il est relié au vérin de trappe 70, monté sur la trappe 50 dans une configuration de tige d'actionnement 72 rentrée.

Les tuyaux 81 et 82 assurent la communication fluidique entre les deux vérins 60 et 70.

En référence à la figure 5B, lorsque le train d'atterrissage 30 descend sous l'action du dispositif de manoeuvre du train (non représenté), il tourne autour de son axe de rotation Y et actionne le vérin de train 60.

La tige d'actionnement 62 est alors déplacée dans sa position rentrée. La rentrée de la tige d'actionnement 62 à l'intérieur du cylindre 63 provoque l'augmentation du volume de la chambre avant 63A et la diminution du volume de la chambre arrière 63B. Le piston 64 exerce alors un effort de pression sur le fluide contenu dans la chambre arrière 63B qui est déplacé hors de la chambre arrière 63B. Le fluide remplit, par l'intermédiaire du tuyau 82, la chambre arrière 73B du vérin de trappe 70.

La chambre arrière 73B du vérin de trappe 70 est remplie de fluide qui exerce, dans le même temps, un effort de pression sur le piston 74. Le piston 74 se déplace dans le sens de la sortie de la tige d'actionnement 72. Parallèlement, le fluide contenu dans la chambre avant 73A est déplacé, par l'intermédiaire du tuyau 81, dans la chambre avant 63A du vérin de train 60.

Ainsi, la tige d'actionnement 72 du vérin de trappe 70 se déplace en position sortie, et provoque la rotation de la trappe autour de son axe X et ainsi l'ouverture de celle-ci.

Inversement, la manoeuvre de remontée du train 30 provoque l'actionnement du vérin de train 60 et la sortie de sa tige 62. Le déplacement de la tige 62 provoque le déplacement, dans le sens opposé au sens décrit précédemment, des pistons 64 et 74, et des fluides contenus dans les chambres respectives. La tige d'actionnement 72 du vérin de trappe 70 est alors déplacée dans le sens de la rentrée. Aussi, le vérin de trappe 70 exerce un effort de traction sur la trappe 50 et provoque la fermeture de celle-ci.

Dans une variante du mode de réalisation de l'invention non représenté, le vérin de train 60 est orienté de sorte que la tige d'actionnement 62 se trouve en position rentrée, et non plus sortie comme précédemment, lorsque le train 30 est remonté.

Ainsi, la descente du train 30 provoque l'actionnement du vérin 60 en déplaçant la tige d'actionnement 62 dans sa position sortie.

Le tuyau 81 est disposé de manière à assurer la communication fluidique entre la chambre avant 63A du vérin de train 60 avec la chambre arrière 73B du vérin de trappe 70. De même, le tuyau 82 assure la communication fluidique entre la chambre arrière 63B du vérin de train 60 avec la chambre avant 73A du vérin de trappe 70.

Le principe de fonctionnement est alors similaire à ce qui a été décrit précédemment.

Par ailleurs, il est à noter que les caractéristiques techniques (diamètre du cylindre, course du piston) peuvent être adaptées pour chaque vérin 60, 70 en fonction éventuellement des contraintes d'espace de la case 20. Ainsi, la course des pistons 64, 74 peut ne pas être identique, le diamètre des cylindres 63 et 73 est alors dimensionné de sorte que le volume de fluide déplacé dans un premier tuyau soit toujours identique au volume déplacé dans le second tuyau.

## Revendications

1. Système d'ouverture et de fermeture d'une trappe (50) pour case (20) de train d'atterrissage (30) d'un aéronef (10), comportant des moyens de liaison (60,70,81,82) entre le train d'atterrissage (30) et la trappe (50) conçus pour assurer l'ouverture de la trappe (50) lors de la sortie du train (30) et la fermeture de la trappe (50) lors de la rentrée du train (30), les moyens de liaison (60,70,81,82) comportant un premier système formant vérin (60) monté sur le train (30) et un second système formant vérin (70) monté sur la trappe (50), les deux systèmes formant vérin (60,70) étant reliés l'un à l'autre par au moins un moyen de communication fluidique (81,82) de sorte que l'actionnement du premier système formant vérin (60) entraîne l'actionnement du second système formant vérin (70), **caractérisé en ce que** le premier système formant vérin (60), le second système formant vérin (70) et le moyen de communication fluidique (81,82) forment ensemble au moins un circuit fluidique fermé.

2. Système selon la revendication 1, **caractérisé en ce que** le second système formant vérin (70) est également monté sur la case de train (20).

3. Système selon la revendication 1 ou 2, **caractérisé en ce que** le second système formant vérin (70) est disposé de manière sensiblement perpendiculaire, localement, à la trappe (50) lorsque celle-ci est fermée.

4. Système selon l'une quelconque des revendications 1 à 3, **caractérisé en ce que** les systèmes formant vérin (60,70) sont des vérins à double effet.

5. Système selon l'une quelconque des revendications 1 à 4, **caractérisé en ce que** chaque cylindre (63,73) desdits systèmes formant vérin (60,70) comporte une chambre avant (63A,73A) et une chambre arrière (63B, 73B), **en ce que** la chambre avant (63A,73A) reçoit une tige dite d'actionnement (62,72), et **en ce qu'**un premier tuyau (81) assure la communication fluidique entre lesdites chambres avant (63A, 73A), et **en ce qu'**un second tuyau (82) assure la communication entre lesdites chambres arrière (63B, 73B).

6. Système selon l'une quelconque des revendications 1 à 4, **caractérisé en ce que** chaque cylindre (63,73) desdits systèmes formant vérin (60,70) comporte une chambre avant (63A,73A) et une chambre arrière (63B, 73B), **en ce que** la chambre avant (63A,73A) reçoit une tige dite d'actionnement (62,72), et **en ce qu'**un premier tuyau (81) assure la communication fluidique entre la chambre avant (63A) du premier système formant vérin (60) et la chambre arrière (73B) du second système formant vérin (70), et **en ce qu'**un second tuyau (82) assure la communication entre la chambre arrière (63B) du premier système formant vérin (60) et la chambre avant (73A) du second système formant vérin (70).

7. Système selon la revendication 5 ou 6, **caractérisé en ce que** les tuyaux (81,82) sont flexibles.

8. Système selon l'une quelconque des revendications 4 à 7, **caractérisé en ce que** les vérins (60,70) comportent une double tige.

9. Système selon l'une quelconque des revendications 5 à 8, **caractérisé en ce que** chaque vérin (60,70) comprend une partie de fixation (65,75) qui s'étend suivant l'axe de symétrie du cylindre (63,73) à partir de la chambre arrière (63B, 73B).

10. Aéronef comportant un système d'ouverture et de fermeture d'une trappe selon l'une quelconque des revendications précédentes.

## Claims

1. A system for opening and closing a door (50) for a landing gear (30) compartment (20) of an aircraft (10), including connecting means (60, 70, 81, 82) between the landing gear (30) and the door (50) designed to ensure the opening of the door (50) when the landing gear (30) comes out and closing of the door (50) when the landing gear (30) goes back in, the connecting means (60, 70, 81, 82) including a first system forming an actuator (60) mounted on the sanding gear (30) and a second system forming an actuator (70) mounted on the door (50), the two systems forming actuators (60, 70) being connected to each other by at least one fluid communication means (81, 82) such that the actuation of the first system forming an actuator (60) causes the actuation of the second system forming an actuator (70), **characterized in that** the first system forming an actuator (60), the second system forming an actuator (70) and the fluid communication means (81, 82) together form at least one closed fluid circuit.

2. The system according to claim 1, **characterized in that** the second system forming an actuator (70) is also mounted on the landing gear compartment (20).

3. The system according to claim 1 or 2, **characterized in that** the second system forming an actuator (70) is arranged substantially perpendicular, locally, to the door (50) when said door is closed.

4. The system according to any one of claims 1 to 3, **characterized in that** the systems forming actuators (60, 70) are two-way cylinders.

5. The system according to any one of claims 1 to 4, **characterized in that** each cylinder (63, 73) of said systems forming actuators (60, 70) includes a front chamber (63A, 73A) and a back chamber (63B, 73B), **in that** the front chamber (63A, 73A) receives a so-called actuating rod (62, 72), and **in that** a first pipe (81) ensures fluid communication between said front chambers (63A, 73A), and **in that** a second pipe (82) ensures communication between said back chambers (63B, 73B).

6. The system according to any one of claims 1 to 4, **characterized in that** each cylinder (63, 73) of said systems forming actuators (60, 70) includes a front chamber (63A, 73A) and a back chamber (63B, 73B), **in that** the front chamber (63A, 73A) receives a so-called actuating rod (62, 72), and **in that** a first pipe (81) ensures fluid communication between the front chamber (63A) of the first system forming an actuator (60) and the back chamber (73B) of the second system forming an actuator (70), and **in that** a second pipe (82) ensures fluid communication between the back chamber (63B) of the first system forming an actuator (60) and the front chamber (73A) of the second system forming an actuator (70).

7. The system according to claim 5 or 6, **characterized in that** the pipes (81, 82) are flexible.

8. The system according to any one of claims 4 to 7, **characterized in that** the actuators (60, 70) include a double rod.

9. The system according to any one of claims 5 to 8, **characterized in that** each actuator (60, 70) comprises a fastening portion (65, 75) that extends along the axis of symmetry of the cylinder (63, 73) from the back chamber (63B, 73B).

10. An aircraft including a system for opening and closing a door according to any one of the preceding claims.

## Patentansprüche

1. System zum Öffnen und Schließen einer Klappe (50) des Schachts (20) des Fahrwerks (30) eines Flugzeugs (10), mit Verbindungseinrichtungen (60, 70, 81, 82) zwischen dem Fahrwerk (30) und der Klappe (50), die so konzipiert sind, dass sie das Öffnen der Klappe (50) beim Ausfahren des Fahrwerks (30) und das Schließen der Klappe (50) beim Einfahren des Fahrwerks (30) gewährleisten, wobei die Verbindungseinrichtungen (60, 70, 81, 82) ein erstes System, einen mit dem Fahrwerk (30) verbundenen Zylinder (60), und ein zweites System, einen mit der Klappe (50) verbundenen Zylinder (70), umfassen, wobei die beiden Zylindersysteme (60, 70) durch wenigstens eine fluidische Kommunikationseinrichtung (81, 82) so miteinander verbunden sind, dass die Betätigung des ersten Zylindersystems (60) die Betätigung des zweiten Zylindersystems (70) nach sich zieht,
**dadurch gekennzeichnet, dass** das erste Zylindersystems (60), das zweite Zylindersystems (70) und die fluidische Kommunikationseinrichtung (81, 82) zusammen mindestens einen geschlossenen Fluidkreislauf bilden.

2. System nach Anspruch 1, **dadurch gekennzeichnet, dass** das zweite Zylindersystem (70) auch mit dem Fahrwerkschacht (20) verbunden ist.

3. System nach Anspruch 1 oder 2, **dadurch gekennzeichnet, dass** das zweite Zylindersystem (70) im Wesentlichen, lokal, senkrecht zu der Klappe (50) ausgerichtet ist, wenn diese geschlossen ist.

4. System nach einem der Ansprüche 1 bis 3, **dadurch gekennzeichnet, dass** die Zylindersysteme (60, 70) doppeltwirkende Zylinder umfassen.

5. System nach einem der Ansprüche 1 bis 4, **dadurch gekennzeichnet, dass** jeder Zylinder (63, 73) der genannten Zylindersysteme (60, 70) eine vordere Kammer (63A, 73A) und eine hintere Kammer (63B, 73B) umfasst, dass die vordere Kammer (63A, 73A) eine Betätigungsstange (62, 72) aufnimmt, und dass eine erste Leitung (81) die Fluidkommunikation zwischen den genannten vorderen Kammern (63A, 73A) gewährleistet, und dass eine zweite Leitung (82) die Kommunikation zwischen den genannten hinteren Kammern (63B, 73B) gewährleistet.

6. System nach einem der Ansprüche 1 bis 4, **dadurch gekennzeichnet, dass** jeder Zylinder (63, 73) der genannten Zylindersysteme (60, 70) eine vordere Kammer (63A, 73A) und eine hintere Kammer (63B, 73B) umfasst, dass die vordere Kammer (63A, 73A) eine Betätigungsstange (62, 72) aufnimmt, und dass eine erste Leitung (81) die Fluidkommunikation zwischen der vorderen Kammer (63A) des ersten Zylindersystems (60) und der hinteren Kammer (73B) des zweiten Zylindersystems (70) gewährleistet, und dass eine zweite Leitung (82) die Kommunikation zwischen der hinteren Kammer (63B) des ersten Zylindersystems (60) und der vorderen Kammer (73A) des zweiten Zylindersystems (70) gewährleistet.

7. System nach Anspruch 5 oder 6, **dadurch gekennzeichnet, dass** die Leitungen (81, 82) flexibel sind.

8. System nach einem der Ansprüche 4 bis 7, **dadurch gekennzeichnet, dass** die Zylinder (60, 70) eine Doppelstange umfassen.

9. System nach einem der Ansprüche 5 bis 8, **dadurch gekennzeichnet, dass** jeder Zylinder (60, 70) einen Befestigungsteil (65, 75) umfasst, der sich ab der hinteren Kammer (63B, 73B) gemäß der Symmetrieachse des Zylinders (63, 72) erstreckt.

10. Flugzeug mit einem System zum Öffnen und Schließen einer Klappe nach einem der vorhergehenden Ansprüche.
